# EUROPEAN PATENT SPECIFICATION

(11) **EP 4 498 787 B1**
(45) Date of publication and mention of the grant of the patent: **24.06.2026**
(21) Application number: 23715271.5
(22) Date of filing: 27.03.2023
(51) Int. Cl.: A01B 69/04, A01D 41/00

(54) **A METHOD TO CULTIVATE A PIECE OF FARMLAND WITH AN AUTONOMOUS TRACTOR AND A TRACTOR FOR EMPLOYING THE METHOD**
VERFAHREN ZUM KULTIVIEREN EINES LANDWIRTSCHAFTLICHEN LANDTEILS MIT EINEM AUTONOMEN TRAKTOR UND TRAKTOR ZUR ANWENDUNG DES VERFAHRENS
PROCÉDÉ DE CULTURE D'UNE PARCELLE DE TERRE AGRICOLE AVEC UN TRACTEUR AUTONOME ET TRACTEUR POUR UTILISER LE PROCÉDÉ

(30) Priority: 28.03.2022 NL 2031414
(43) Date of publication of application: 05.02.2025
(73) Proprietor: AgXeed Holding B.V., 5971 NG Grubbenvorst (NL)
(72) Inventor: HIDDEMA, Joris Jan, 5971 DL Grubbenvorst (NL); SCHMITZ, Laurentius Hubertus Margaretha, 6105 AX Mariahoop (NL)
(74) Representative: Janssen, Paulus J. P.
(86) International application number: PCT/NL2023/050151
(87) International publication number: WO 2023/191615

(56) References cited:
- EP-A1- 3 104 244
- EP-A1- 3 725 632
- WO-A1-2017/159801
- JP-A- 2005 215 742
- KR-B1- 102 145 902
- US-A1- 2020 189 388

## Description

### GENERAL FIELD OF THE INVENTION

The present invention pertains in general to unmanned autonomous tractors for completely autonomously crossing and cultivating farmland.

### BACKGROUND ART

The adoption of technology in agriculture has improved the approaches that farmers use in the farmland nowadays. Modern agriculture has made it easy for farmers to achieve high produce while using less input. According the trends in the use of technology in agriculture, there are high concerns that the future of agriculture is bright. For example, mechanization in agriculture has reduced the overuse of manpower in doing some of the farming activities. As a consequence, agricultural machines have become bigger and bigger and more dedicated towards performing one type of cultivation. The introduction of autonomous tractors is considered a next step into the future of farming and it is expected that using autonomous tractors, the trend of bigger and more dedicated (specialised) farming machines will continue.

Self-driving cars are common these days. Based on the trends in regards to the advancement of technology, it is expected that the technology will also be used for cultivating farmland. At present farmers in advanced countries are giving a tactical approach to how they plant, harvest, as well as maintain their crops. A good example of new tactical approaches is the use of autonomous tractors in agriculture. The concept of autonomous tractors can be traced back prior to the introduction of the concept of precision farming in the eighties. During these days, farmers used GPS technology as a guide to the tractors across the farmland. The aim of such an approach was the reduction of fuel consumption and enhancing the efficiency of the tractors and the farming activities. As such, these initial steps formed the basis for the development of autonomous tractors, following the introduction of technologies that improved communication over wireless devices. Autonomous tractors employ much the same approach as the driverless vehicles, i.e. using advanced control systems and sensors. With the inclusion of auto-steering abilities, such tractors have added control abilities. Evidently, the launch of the autonomous tractors is considerably a manifestation of the extended use of technology in farming.

Benefits to farmers are obvious. It is an undeniable fact that farming is not an easy undertaking, it involves working for long hours and the subscription to hard labor in harsh weather conditions. Taking into consideration the common state of farmers, the majority of them have no employees to task them in the farmland and hence, have to do everything all by themselves. The autonomous tractors can be a positive outcome. Next to this, accuracy and precision are important aspects in agriculture in various aspects such as planting. Regarding for example such planting, the autonomous tractors can be equipped with automatic planting systems that ensure high accuracy when planting. With such abilities, farmers are assured of seed conservation. All in all, the use of such tractors may lead to higher return on investment since accuracy is enhanced.

One of the factors that hinder agricultural production in both developed and developing countries is the lack of enough labor. Normally, farmers grow a small section of land which they are sure to manage with their limited labor. However, with the adoption of the autonomous tractors, the problem of labor insufficiency is catered for since the number of employees needed to cultivate the farmland may be reduced.

It is generally recognized that data plays a significant role in determining the farmers' decisions. Usually, the absence of clear and reliable data can interfere with the decisions farmers make, and subsequently, have adverse impacts on the amount of outcome obtained from the fields. There are diverse sources and types of data that a farmer needs to succeed in their farming activities. For example, data on soil is important in that it helps farmers in determining what crops will do well in a given piece of land by establishing the moisture content, and the amount of nutrients. The autonomous tractors can be fitted with various sensors that can be used in the collection of data on the conditions of the soil, and hence, offer a platform for improving the outcome of the available crops. The elimination of the human interaction in farming following the use of autonomous tractors may thus be advantageous. Stressed employees cannot achieve the required efficiency level in the fields. Similarly, it is often hard for humans to manage diverse tasks on the farm especially where a large farmland is involved. Autonomous tractors have the appropriate sensors to offer the necessary help in the management of a several tasks in the farmland hence reducing stress and the workload in the farm.

The autonomous tractors run on high level technology that can be used in gathering high profile information. For example, some models have automatic steering abilities and GPS technologies which enhance the control of the tractors' course. The advanced sensors come in handy in the determination of soil moisture level, activities around planting and harvesting, present yield, as well as the amount of fuel needed for a given area of land. Additionally, other models of autonomous tractors can guide farmers on how to apply fertilizers.

Autonomous tractors allow precise control of work and farm equipment. This makes it possible for farmers to extend their working hours. The sensors fitted in the tractors can guide it in the right course even in conditions of reduced visibility and at night: work continues even during windy, dusty, and foggy conditions. Additionally, the ability of the tractors to reduce workload and stress on employees comes in handy in increased working hours in a day since the farmer has a greater flexibility in the management of growing tasks.

It has thus become a common understanding that the best way for using an autonomous tractor is to establish a cultivation plan to cultivate the piece of land, which plan for examples defines the routing and speed of the tractor over the land, as well as the way the actual agricultural machine (which may be part of the tractor or coupled thereto) is operated (for example its driving speed, its height with respect to the land, its angle with respect to the land etc.), and using the sensor technology to adapt this predetermined plan to the particular circumstances of the moment in time the land is actually cultivated. Such circumstances can for example be objects that were not present at the piece of land at the time the plan was made, the weather conditions, etc. Thus, with appropriate sensor technology, it is commonly believed that one is able to completely pre-plan the cultivation operation. However, In the art it is recognised that sometimes intervention of the planned autonomous cultivation is desired. For this, the art describes all kinds of monitoring systems to continuously monitor the cultivation process, including movement of the autonomous tractor over the piece of farmland, examples of which monitoring systems are given here below.

US patent application 2019/0364,734 (assigned to Claas Selbstfahrende Erntemaschinen GmbH) discloses a method and apparatus for controlling an agricultural harvesting campaign, in which predetermined harvesting activities are processed within a campaign timeline by a plurality of agricultural working machines of a machine fleet on a field allotment assigned to the harvesting campaign. The control of the harvesting campaign is executed on different application levels by continuously generating information, wherein the generated information is continuously provided to all of the application levels, and the generated data comprise remotely-sensed field information. In the method, use is made of so called field zones to be transmitted in the machine control routine to the respective machine control of at least one, some or all of the autonomous tractors. In the method, although in principle automated, the field zones may be displayed. The operator of the respective tractor may accordingly check whether or not the division of the field zones corresponds to the actual conditions with regard to operating quality. On this basis, the user may intervene to correct the control of the tractor.

US 10191492 (assigned to Yanmar Co Ltd) discloses an autonomous tractor which is provided with a position calculation means that measures the position of the tractor by means of a satellite positioning system, a steering actuator that operates a steering device, an engine rotation control means, a transmission means, and a CPU that controls each of same. The tractor is caused to autonomously travel, along a set travel path stored in the CPU, by means of attended operation and that is mounted with a remote operation device that can co-control the autonomous tractor, and the CPU halts autonomous travel when a signal disruption from the satellites, a large deviation from the set travel path, an abnormal sensor value, fuel exhaustion, or the like is detected.

US 8985250 (assigned to Camoplast Solideal Inc) discloses a method for managing a drive mode of an autonomous vehicle provided with endless tracks, including reading an output of a sensor for sensing a magnitude of force applied by a drive wheel to the track to drive the track and, in response to the output of the sensor, performing a control action to manage the drive mode of the vehicle. The particular control strategy aims to maintain the track as much as possible in a positive drive mode, and uses a friction drive mode when the power loading on the track is significant in order to provide an assist function. This control strategy is implemented by regulating the track tension: the higher the tension the more significant the friction between the track and its sprocket is. In contrast, the lower the tension of the track the lower the friction.

EP 3725632 discloses a manned tractor (i.e. a human operator is present to control the tractor) which tractor can also be switched to an automatic mode. The tractor has a slip determination system such that based on the actual slip amount it is determined whether or not the state of a travelled ground surface is appropriate for the automatic mode. If not, the tractor is simply stopped and is switched back to manual mode for operation by the human operator present in the cabin of the tractor. Another example can be found in document KR102145902B1.

### OBJECT OF THE INVENTION

It is an object of the invention to devise an alternative method to cultivate a piece of farmland using an autonomous tractor, including an improved monitoring system to improve cultivation.

### SUMMARY OF THE INVENTION

In order to meet the object of the invention, a method to cultivate a piece of farmland using an autonomous tractor that comprises an engine and at least one wheel operatively connected to the said engine and supported on a surface of the piece of farmland, the method comprising running the engine to turn the wheel in order impose a movement of the autonomous tractor over the surface of the piece of farmland, cultivating the piece of farmland while the autonomous tractor is moving over its surface, assessing slip of the wheel with respect to the surface, wherein when it is established that the wheel slips in longitudinal direction with respect to the surface of the piece of farmland, and the tractor does not move any more in the direction corresponding to the turning wheel, the autonomous tractor is controlled to make an emergency stop.

The new method is based on the recognition that due to unforeseen circumstances it might be that the movement of the vehicle deviates from is planned movement due to slip of the (drive) wheel. Although in the art solution are described, for example alter the driving force of the wheel, it was found that an emergency stop is advantageous. In particular, there is a risk for a permanently unmanned vehicle (having no operator present on site to overview the cultivation) in particular when longitudinal slip occurs (i.e. slip in the direction of movement): longitudinal slip may lead to the tractor digging into the land. As long as fuel is present, and no operator to shut of the engine, the wheel keeps on turning to try and cultivate according to plan, but keeps on digging deeper in the land. Lateral or other kinds of slip may also be problematic, often leading to the tractor arriving at sites or a spatial configuration that is unwanted, but that is a completely other problem. In particular when longitudinal slip occurs, in order to prevent that the tractor digs into the land too deep to enable easy recovery of the vehicle to be able and continue cultivation according to plan, while at the same time prevent too much damage to the land and the tractor (wheels, bearings, suspension etc), an emergency stop of the tractor is needed. This stop is then preferably followed by a recovery action such as for example pulling the tractor of the site where the slip occurred. Alternatively, after the emergency stop has been signaled to an of site operator, this operator may choose to implement an alternative drive strategy for the wheel from a remote station to try and recover the tractor. This may also be done by the CPU starting an automatic recovery operation after the emergency stop has taken place. It is not until the recovery action has bene completed successfully that the cultivation can continue as planned.

The invention also pertains to a permanently unmanned autonomous tractor for cultivating a piece of farmland, the tractor comprising an engine and at least one wheel operatively connected to the said engine to support the tractor on a surface of the piece of farmland, the tractor comprising a central processing unit (CPU) for assessing slip of the wheel with respect to the surface of the piece of farmland when the autonomous tractor is moving over this surface, characterised in that the tractor is controlled by the CPU such that when it is established that the wheel slips in longitudinal direction with respect to the surface of the piece of farmland, and the tractor does not move any more in the direction corresponding to the turning wheel, the autonomous tractor is controlled to make an emergency stop.

### DEFINITONS

A *tractor* is an agricultural vehicle that is used cultivate land, typically by pulling or carrying agricultural machinery, and to provide the energy needed for the machinery to cultivate the land (including any harvesting action). It commonly, but not necessarily, is a powerful vehicle with a gasoline or electric engine and large rear wheels such as for example endless belt tracks (so called caterpillar tracks).

An *autonomous* tractor is a tractor that can move over a piece of land according to a predetermined cultivation plan without a human operator controlling its movement. Such a tractor can automatically perceive its environment, make decisions based on what it perceives and recognizes, and then actuate a movement or manipulation within that environment. These decision-based actions may include, but are not limited to, starting, stopping, and maneuvering around obstacles that are in its way. Such a tractor can cross farmland without needing continuous control of a human operator, and thus is able to autonomously cultivate the land.

A *permanently unmanned* tractor is a tractor wherein no human operator is on board, preferably not even on site (i.e. within eye distance) at any time the vehicle is cultivating land.

*Farmland* is land that is used for or suitable for farming.

A *wheel* of a vehicle is an item arranged to revolve on an axis, such as a common spoked car wheel or an endless track (such as a caterpillar track), which is used to convert a rotation (of the axis) into a movement of the vehicle.

An *emergency stop* is a stopping process that is not pre-planned as part of a predetermined cultivation plan, but imposed as the result of a sudden, not foreseen event.

*Slip* is the relative motion between a wheel (in particular he surface of the wheel such as the outer circumference of a tire or an endless track provided as part of the wheel assembly) and the surface it is moving on. Slip can be generated either by the wheel's rotational speed being greater or less than the free-rolling speed (usually described as percent slip), or by the tire's plane of rotation being at an angle to its direction of motion (referred to as slip angle). *Longitudinal* slip is generally given as a percentage of the difference between the surface speed of the wheel compared to the speed between axle and road surface (see Szostak, H.T., Allen, W.R., and Rosenthal, T.J., Analytical Modeling of Driver Response in Crash Avoidance Maneuvering Volume II: An Interactive Model for Driver/Vehicle Simulation, U.S Department of Transportation Report NHTSA DOT HS-807-271, April 1988).

*Automatically* means without the need of (human) operator intervention. Automatically does not exclude that something is operator initiated or stopped as long the process can be completed without needing operator intervention.

A *central processing unit* or CPU is an electronic circuitry within a computer system that carries out the instructions of a computer program by performing the basic arithmetic, logic, controlling and input/output (I/O) operations specified by the instructions. The term "CPU" may refer to a tangible (single) processor, more specifically to its processing unit and control unit (CU), but may also refer to multiple processors distributed over a (wireless) networked system operating as if part of one single processor (for example partly present on the tractor, a connected agricultural machine and a remote server via a cloud system).

### FURTHER EMBODIMENTS OF THE INVENTION

In a first further embodiment of the method according to the invetion, in the method the presence of positive slip is assessed. Although also unwanted, negative slip (skidding) is less of a problem than positive slip (spinning of the wheel) for an autonomous tractor. Therefore, in this embodiment positive slip is assessed.

In another embodiment, the autonomous tractor is controlled to make an emergency stop when the slip is above a predetermined threshold value. It was found advantageous not to impose the emergency stop at any level of slip, but only above a predetermined threshold value such as for example, 50% or higher, such as 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81,82, 83, 84, 85, 86, 87, 88, 89, 90, 91, 92, 93, 94, 95, 96, 97, 98, 99 or 100% slip.

The autonomous tractor is controlled to make an emergency stop when the tractor does not move any more in the direction corresponding to the turning wheel. It was found that as long as there is still some forward movement, there is a chance that the tractor is able to overcome the situation of longitudinal slip and continue the cultivation according to plan. When the movement at any point in time has become zero (which can be established using e.g. a GPS system), the chance of recovery is so low that an emergency stop is performed.

In still again another embodiment, the autonomous tractor is controlled to make an emergency stop when the slip occurs longer than a predetermined threshold period of time. It was found advantageous not to impose the emergency stop immediately after slip occurs, but only when the slip occurs longer than a predetermined threshold period of time, such as for example 0.2 seconds or more, such as for example 0.3, 0.4, 0.5, 0.6, 0.7, 0.8, 0.9, 1.0, 1.2, 1.4, 1.6, 1.8, 2.0, 2.5, 3.0, 3.5, 4.0, 4.5, 5 seconds or even more. This is because it was recognised that short periods of time may exist wherein there is slip even though the tractor crosses the farmland according to the predetermined plan. Interruption of the cultivation by making an emergency stop while facing small periods of slip could otherwise be detrimental to performance of the cultivation.

In yet a further embodiment of the method according to the invention, the operative connection between the wheel and the engine is interrupted for making the emergency stop. By interrupting the operative connection between the engine and the wheel, any further driving of the wheel can be stopped, this way providing for the emergency stop, while at the same time allowing the engine to continue running.

In another embodiment of the method according to the invention, the engine is shut off for making the emergency stop. This can be done as an alternative for the embodiment described here above, or in addition thereto.

In another embodiment wherein the autonomous tractor has an additional second wheel that is operatively connected to the said engine and supported on the surface of the piece of farmland, when it is established that at least one of the two wheels slips with respect to the surface of the piece of farmland, the autonomous tractor is controlled to make an emergency stop. In yet another embodiment, the emergency stop is only imposed when both wheels slip.

In an embodiment the wheel of the autonomous tractor is an endless track. Although the risk of slipping of such a track with respect to the surface is small, any slip can be very detrimental to this surface and the potentially to the recovery of the machine to enable continuation of the cultivation as planned.

It is noted that any and all embodiments as described here above or exemplified here after in the examples section for the method according to the invention can also be embodied in the autonomous tractor according to the invention.

The invention will now be further illustrated using the following specific examples.

### EXAMPLES OF THE INVENTION

Figure 1 schematically shows an autonomous tractor according to the invention.
Figure 2 schematically shows a control diagram for the tractor of figure 1.
Figure 3 is a flow diagram describing a method according to the invention.

### Figure 1

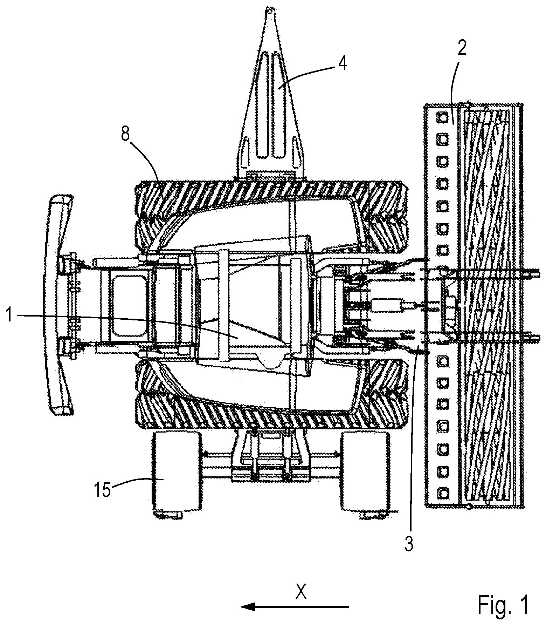

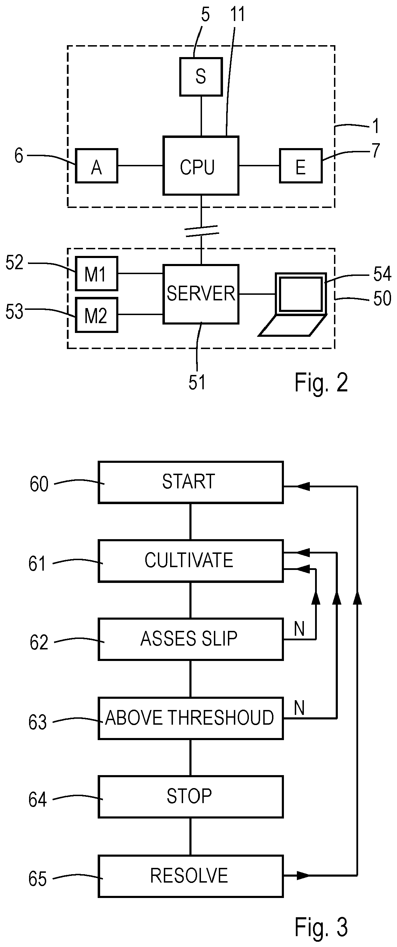

Figure 1 is a schematic top plan view of an autonomous tractor 1 for autonomously crossing farmland. Such a tractor as such is known from the art, and described in detail in WO2020/106142 (assigned to Agxeed Holding BV). In particular, the tractor 1 crosses the farmland in the direction indicated as X. At is trailing end, coupled to the tractor via common triangle coupler 3 is a power harrow 2. The triangle has standard dimensions and drive axle such that various common agricultural machines can be coupled to the tractor. During the autonomous crossing of the farmland in direction X, the power harrow rests on the land for cultivating it. The tractor has an internal engine (not depicted) which drives the wheels 8 (in this case endless tracks) and the power harrow. The operative connection between the engine and the wheels comprises a common clutch and gearbox. When the engine runs, it is able to transfer power to the wheels 8, to turn the tracks in order impose a movement of the autonomous tractor over the surface of the piece of farmland to be cultivated. Using a central processing unit (see figure 2) it is continuously assessed during the cultivation operation whether any of the wheels undergoes a positive longitudinal slip with respect to the surface. If so, and if threshold parameters for this slip are met, the tractor makes an emergency stop to prevent too much damage to the land and at the same time prevent the tractor digging too deep into the land. When an operator is nearby, the emergency stop is accomplished by interrupting the operative connection between the engine and the wheels (for example by putting the gear box into neutral position). When it takes a long time for an operator to arrive at the scene, the engine will be shut off.

For making sure the tractor is not principally hindered by any obstacles, the front side is provided with several sensors (not depicted) for detection of such obstacles when crossing the farmland. Laterally, the tractor is provided with a drawbar 4 and opposite thereof, with a second set of wheels 15. The drawbar and second set of wheels are not in use when the tractor crosses the farmland. They serve to help in transporting the tractor over the road. To enable thus, the drawbar can be used for connecting the tractor to a road haulage truck for transport of the tractor over the road, whereas the set of wheels 15 acts to provide rolling support as described in the '142 patent application mentioned here above.

### Figure 2

Figure 2 schematically shows a control diagram for the tractor 1 of figure 1. The tractor 1 has a central processing unit 11, that is connected (wired or wireless; this is the same for any other connection in figure 2) to sensor assembly 5, actuator 6 and engine 7. The CPU controls the engine when cultivating a piece of farmland according to a predetermined cultivation plan that was made at a remote location 50, using computer 54 and dedicated software. The computer is connected to a server 51 that on its turn is connected to CPU 11. The tractor operates normally under the control of CPU 11 (which might also be present at a remote location, thus not being part of the actual tractor, or distributed over the tractor and one or more remote locations). The conditions for the cultivation plan are established at location 50 as well and stored in memory 52. In this memory, different sets of conditions are stored that correspond e.g. to safety regulations. Depending for example on the type of tractor, the type of cultivation, the type of farmland (size, proximity to urban areas, etc), the weather conditions, a particular set of conditions can be chosen to be used for the operation. Memory 53 holds multiple distinct sets of conditions for implements to be connected to the tractor.

In operation, when cultivating the farmland, the sensor assembly 5 continuously assesses whether one or both of the wheels engage any slip. If the slip of at least one of the wheels meets predetermined threshold values for unwanted slip, actuator 6 is used to interrupt the operative connection between the wheel (as such not depicted in figure 2) and the engine for making an emergency stop. Alternatively, the CPU shuts of the engine as explained here above with reference to figure 1.

### Figure 3

Figure 3 is a flow diagram describing a method according to the invention (showing only the blocks relevant to describe the current invention). In step 60, the tractor is started to be able and perform a cultivation operation on a piece of farmland. In the next step 61, the cultivation is actually being performed while the tractor crosses the surface of the piece of farmland. During this cultivation, in a step 62 it is assessed whether one or more of the driven wheels encounters slip. If the answer is "No", cultivation is continued according to step 61. If the answer is "Yes", in a next step 63 it is established whether the slip meets a predetermined threshold value. If not, cultivation is continued according to step 61. If the answer is "Yes", then the tractor is controlled in step 64 to make an emergency stop. If the problem is resolved in step 65, the tractor can be started again in step 60 to try and continue cultivation until the whole piece of land is cultivated according to plan. Ultimately, the tractor is stopped and can be picked up to bring to another piece of farmland as described here above with reference to figure 1.

## Claims

1. A method to cultivate a piece of farmland using a permanently unmanned autonomous tractor that comprises an engine and at least one wheel operatively connected to the said engine and supported on a surface of the piece of farmland, the method comprising
- running the engine to turn the wheel in order impose a movement of the autonomous tractor over the surface of the piece of farmland;
- cultivating the piece of farmland while the autonomous tractor is moving over its surface;
- assessing slip of the wheel with respect to the surface;
**characterised in that** when it is established that the wheel slips in longitudinal direction with respect to the surface of the piece of farmland, and the tractor does not move any more in the direction corresponding to the turning wheel, the autonomous tractor is controlled to make an emergency stop.

2. A method according to claim 1, **characterised in that** in the method the presence of positive slip is assessed.

3. A method according to any of the preceding claims, **characterised in that** the autonomous tractor is controlled to make an emergency stop when the slip occurs longer than a predetermined threshold period of time.

4. A method according to any of the preceding claims, **characterised in that** the operative connection between the wheel and the engine is interrupted for making the emergency stop.

5. A method according to any of the preceding claims, **characterised in that** the engine is shut off for making the emergency stop.

6. A method according to any of the preceding claims wherein the autonomous tractor has an additional second wheel that is operatively connected to the said engine and supported on the surface of the piece of farmland, **characterised in that** when it is established that at least one of the two wheels slips with respect to the surface of the piece of farmland, the autonomous tractor is controlled to make an emergency stop.

7. A method according to any of the preceding claims, **characterised in that** the wheel of the autonomous tractor is an endless track.

8. A permanently unmanned autonomous tractor for cultivating a piece of farmland, the tractor comprising an engine and at least one wheel operatively connected to the said engine to support the tractor on a surface of the piece of farmland, the tractor comprising a central processing unit (CPU) for assessing slip of the wheel with respect to the surface of the piece of farmland when the autonomous tractor is moving over this surface, **characterised in that** the tractor is controlled by the CPU such that when it is established that the wheel slips in longitudinal direction with respect to the surface of the piece of farmland when moving over this surface, and the tractor does not move any more in the direction corresponding to the turning wheel, the autonomous tractor makes an emergency stop.

## Patentansprüche

1. Verfahren zum Bestellen eines Stücks Ackerland unter Verwendung eines dauerhaft unbemannten autonomen Traktors, der einen Motor und mindestens ein Rad, das mit dem Motor betriebsfähig verbunden ist und sich an einer Oberfläche des Stücks Ackerland abstützt, umfasst, wobei das Verfahren umfasst
- Laufenlassen des Motors, um das Rad zu drehen, um eine Bewegung des autonomen Traktors über die Fläche des Stücks Ackerland zu bewirken;
- Bestellen des Stücks Ackerland, während sich der autonome Traktor über die Fläche desselben bewegt;
- Bewerten des Schlupfs des Rads im Verhältnis zur Oberfläche;
**dadurch gekennzeichnet, dass** wenn festgestellt wird, dass das Rad in der Längsrichtung im Verhältnis zur Oberfläche des Stücks Ackerland rutscht, und sich der Traktor nicht weiter in der Richtung, die dem sich drehenden Rad entspricht, bewegt, der autonome Traktor dazu gesteuert wird, eine Notbremsung vorzunehmen.

2. Verfahren nach Anspruch 1, **dadurch gekennzeichnet, dass** bei dem Verfahren das Vorliegen von positivem Schlupf bewertet wird.

3. Verfahren nach einem der vorhergehenden Ansprüche, **dadurch gekennzeichnet, dass** der autonome Traktor dazu gesteuert wird, eine Notbremsung vorzunehmen, wenn der Schlupf länger als ein vorbestimmter Schwellenzeitraum vorkommt.

4. Verfahren nach einem der vorhergehenden Ansprüche, **dadurch gekennzeichnet, dass** die betriebsfähige Verbindung zwischen dem Rad und dem Motor unterbrochen wird, um die Notbremsung vorzunehmen.

5. Verfahren nach einem der vorhergehenden Ansprüche, **dadurch gekennzeichnet, dass** der Motor ausgeschaltet wird, um die Notbremsung vorzunehmen.

6. Verfahren nach einem der vorhergehenden Ansprüche, wobei der autonome Traktor ein zusätzliches zweites Rad aufweist, das betriebsfähig mit dem Motor verbunden ist und sich an der Oberfläche des Stücks Ackerland abstützt, **dadurch gekennzeichnet, dass** wenn festgestellt wird, dass mindestens eines der beiden Räder im Verhältnis zur Oberfläche des Stücks Ackerland rutscht, der autonome Traktor dazu gesteuert wird, eine Notbremsung vorzunehmen.

7. Verfahren nach einem der vorhergehenden Ansprüche, **dadurch gekennzeichnet, dass** das Rad des autonomen Traktors eine Raupenkette ist.

8. Dauerhaft unbemannter autonomer Traktor zum Bestellen eines Stücks Ackerland, wobei der Traktor einen Motor und mindestens ein Rad, das mit dem Motor betriebsfähig verbunden ist, um den Traktor an einer Oberfläche des Stücks Ackerland abzustützen, umfasst, wobei der Traktor eine Zentraleinheit (CPU) umfasst, um den Schlupf des Rads im Verhältnis zur Oberfläche des Stücks Ackerland zu bewerten, wenn sich der autonome Traktor über diese Fläche bewegt, **dadurch gekennzeichnet, dass** der Traktor durch die CPU derart gesteuert wird, dass wenn festgestellt wird, dass das Rad in Längsrichtung im Verhältnis zur Oberfläche des Stücks Ackerland rutscht, wenn es sich über diese Fläche bewegt, und sich der Traktor nicht weiter in der Richtung, die dem sich drehenden Rad entspricht, bewegt, der autonome Traktor eine Notbremsung vornimmt.

## Revendications

1. Procédé permettant de cultiver une parcelle de terre agricole en utilisant un tracteur autonome sans conducteur de façon permanente qui comprend un moteur et au moins une roue reliée de manière opérationnelle audit moteur et supportée sur une surface de la parcelle de terre agricole, le procédé comprenant les étapes consistant à
- faire fonctionner le moteur pour tourner la roue afin de provoquer un mouvement du tracteur autonome sur la surface de la parcelle de terre agricole ;
- cultiver la parcelle de terre agricole pendant que le tracteur autonome se déplace sur sa surface ;
- évaluer le patinage de la roue par rapport à la surface ;
**caractérisé en ce que** lorsqu'il est établi que la roue patine dans la direction longitudinale par rapport à la surface de la parcelle de terre agricole, et le tracteur ne se déplace plus dans la direction correspondant à la roue qui tourne, le tracteur autonome est commandé pour effectuer un arrêt d'urgence.

2. Procédé selon la revendication 1, **caractérisé en ce que** dans le procédé, la présence de patinage positif est évaluée.

3. Procédé selon l'une quelconque des revendications précédentes, **caractérisé en ce que** le tracteur autonome est commandé pour effectuer un arrêt d'urgence lorsque le patinage survient pendant plus longtemps qu'une période de temps seuil prédéterminée.

4. Procédé selon l'une quelconque des revendications précédentes, **caractérisé en ce que** la liaison opérationnelle entre la roue et le moteur est interrompue pour effectuer l'arrêt d'urgence.

5. Procédé selon l'une quelconque des revendications précédentes, **caractérisé en ce que** le moteur est coupé pour effectuer l'arrêt d'urgence.

6. Procédé selon l'une quelconque des revendications précédentes, dans lequel le tracteur autonome présente une deuxième roue supplémentaire qui est reliée de manière opérationnelle audit moteur et supportée à la surface de la parcelle de terre agricole, **caractérisé en ce que** lorsqu'il est établi qu'au moins l'une des deux roues patine par rapport à la surface de la parcelle de terre agricole, le tracteur autonome est commandé pour effectuer un arrêt d'urgence.

7. Procédé selon l'une quelconque des revendications précédentes, **caractérisé en ce que** la roue du tracteur autonome est une chenille.

8. Tracteur autonome sans conducteur de façon permanente permettant de cultiver une parcelle de terre agricole, le tracteur comprenant un moteur et au moins one roue reliée de manière opérationnelle audit moteur pour supporter le tracteur sur une surface de la parcelle de terre agricole, le tracteur comprenant une unité centrale (CPU) pour évaluer le patinage de la roue par rapport à la surface de la parcelle de terre agricole lorsque le tracteur autonome se déplace sur cette surface, **caractérisé en ce que** le tracteur est commandé par la CPU de telle sorte que lorsqu'il est établi que la roue patine dans la direction longitudinale par rapport à la surface de la parcelle de terre agricole lorsqu'il se déplace sur cette surface, et le tracteur ne se déplace plus dans la direction correspondant à la roue qui tourne, le tracteur autonome effectue un arrêt d'urgence.
